# EUROPÄISCHE PATENTSCHRIFT

(11) **EP 1 186 102 B1**
(45) Veröffentlichungstag und Bekanntmachung des Hinweises auf die Patenterteilung: **28.11.2007**
(21) Anmeldenummer: 00941901.1
(22) Anmeldetag: 04.05.2000
(51) Int. Cl.: H03K 17/00

(54) **VERFAHREN UND VORRICHTUNG ZUR OPEN-LOAD-DIAGNOSE EINER SCHALTSTUFE**
METHOD AND DEVICE FOR THE OPEN-LOAD DIAGNOSIS OF A SWITCHING STAGE
PROCEDE ET DISPOSITIF POUR EFFECTUER UN DIAGNOSTIC "CHARGE OUVERTE" SUR UN ETAGE DE COMMUTATION

(30) Priorität: 04.05.1999 DE 19920465
(43) Veröffentlichungstag der Anmeldung: 13.03.2002
(73) Patentinhaber: Siemens VDO Automotive AG, 93055 Regensburg (DE); X-FAB Semiconductor Foundries GmbH, 99097 Erfurt (DE)
(72) Erfinder: SASS, Dieter, D-93059 Regensburg (DE); HAIMERL, Stefan, D-93049 Regensburg (DE); FREY, Michael, D-99086 Erfurt (DE); SEIFERT, Mario, D-08485 Lengenfeld (DE)
(86) Internationale Anmeldenummer: PCT/DE2000/001406
(87) Internationale Veröffentlichungsnummer: WO 2000/067379

(56) Entgegenhaltungen:
- EP-A1- 0 743 529
- DE-A1- 19 705 339
- US-A- 5 438 286
- US-A- 5 895 989

## Beschreibung

Die Erfindung betrifft ein Verfahren zur Open-Load-Diagnose einer Schaltstufe gemäß Anspruch 1 und eine Vorrichtung zur Durchführung dieses Verfahrens gemäß Anspruch 4.

In der Kraftfahrzeug-Elektronik werden zunehmend Lasten, beispielsweise Zündspulen oder Kraftstoffeinspritzventile, mittels elektronischer Endstufen geschaltet, wobei die Endstufe möglichst nahe bei der Last angeordnet ist und zur Vermeidung von Störimpulsen von einer in einem Steuergerät angeordneten Treiber-Schaltstufe, mit der sie über Kabel (Kabelbaum) verbunden ist, mit kleinen Schaltströmen und -spannungen angesteuert wird. Bei einer solchen Schaltstufe soll eine Open-Load-Diagnose (Prüfen auf Leitungsbruch) durchgeführt werden, wobei folgende Randbedingungen erfüllt werden sollen:
a) die Open-Load- Diagnose muß online durchgeführt werden, d.h., während des aktiven Betriebes, mindestens zyklisch;
b) ein großes Verhältnis (Faktor größer 100) von maximalem Laststrom und Open-Load-Erkennungsschwelle (Referenzstrom) bei einem kleinen zulässigen Spannungsabfall über dem Schalttransistor (DMOS- oder MOSFET-Schalter);
c) die Open-Load- Diagnose muß so durchgeführt werden, daß der zulässige Spannungsabfall am Endstufenschalter nicht überschritten wird;
d) eine hohe Genauigkeit der Erkennungsschwelle bezüglich Prozeßschwankungen bei Ausführung der Schaltstufe als integrierte Schaltung;
e) die Lastkapazität am Ausgang des Endstufenschalters (Kabelbaum-Kapazität) muß beim Aktivieren desselben rasch umgeladen werden;
f) die Lösung muß für eine kostengünstige Serienproduktion geeignet sein.

Aus DE 40 20 187 C2 ist eine Ansteuerschaltung für eine Last mittels einer Transistorvorrichtung mit einem Haupttransistor und einem zu diesem parallelen Meßtransistor bekannt, wobei mit dem Meßtransistor ein Shuntwiderstand in Reihe geschaltet ist. Nach dem Einschalten beider Transistoren werden beide wieder abgeschaltet, wenn nach einer vorgegebenen Verzögerungszeit die am Shuntwiderstand abfallende Spannung einen vorgegebenen Referenzwert übersteigt.

Es ist Aufgabe der Erfindung, ein Verfahren zur Open-Load-Diagnose einer Schaltstufe anzugeben und eine Vorrichtung zur Durchführung dieses Verfahrens zu schaffen, welche die oben genannten Randbedingungen erfüllt.

Diese Aufgabe wird erfindungsgemäß durch ein Verfahren mit den Merkmalen des Anspruchs 1 und einer Vorrichtung zur Durchführung dieses Verfahrens nach Anspruch 4 gelöst.

Ein Ausführungsbeispiel der Erfindung wird nachstehend anhand einer in der Zeichnung dargestellten Schaltstufe beschrieben.
Es zeigen:
- Figur 1: ein schematisches Schaltbild einer integrierten Treiber-Schaltstufe, und
- Figur 2: ein Ablaufdiagramm der Funktionsweise des erfindungsgemäßen Verfahrens.

Es wird zunächst die erfindungsgemäße Vorrichtung einer Schaltstufe beschrieben, mittels welcher anschließend das Verfahren einer Open-Load-Diagnose erklärt wird.

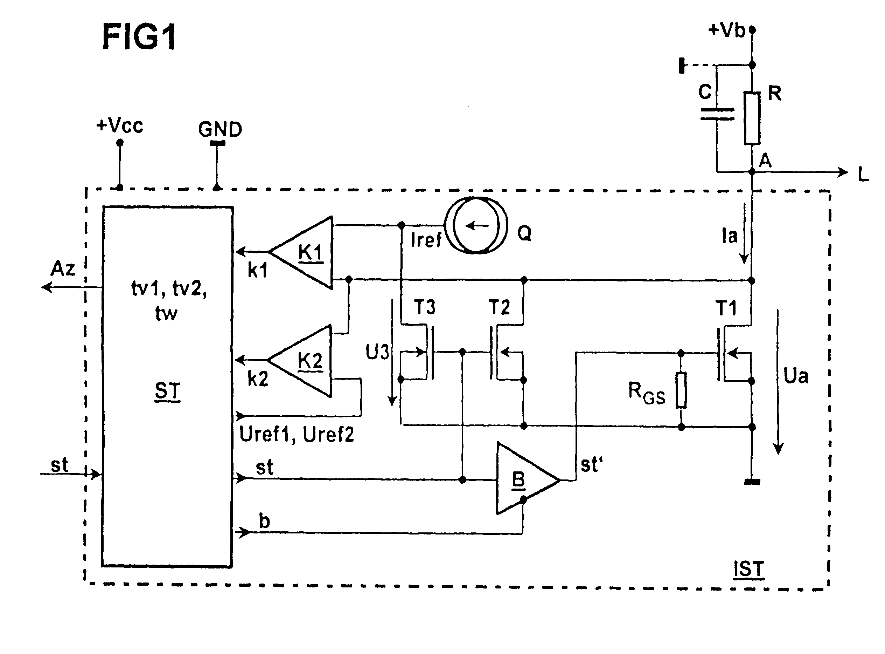

Figur 1 zeigt eine strichpunktiert umrahmte, integrierte Schaltung IST, die als sog. "Intersystem-Treiber" mit einem Lowside-Schalttransistor beispielsweise für die Ansteuerung einer nicht dargestellten Zündspule einer Kraftfahrzeug-Brennkraftmaschine verwendet wird. Der Intersystem-Treiber kann jedoch auch einen Highside-Schalttransistor aufweisen.

Dabei ist die nicht dargestellte Endstufe mit dem Leistungsschalter, mit welchem die Zündspule ein- und ausgeschaltet wird, möglichst nahe bei dieser Zündspule angeordnet. Die Steuersignale st für die Zündspule werden abhängig von vielen Parametern in einem nicht dargestellten Motorsteuergerät erzeugt und werden über den Intersystem-Treiber IST, im folgenden mit "Treiber" bezeichnet, der sich im Motorsteuergerät befinden kann, und über in einem sog. "Kabelbaum" befindliche Leitungen der Endstufe zugeführt. Dies hat den Vorteil, daß über den Kabelbaum nur kleine Schaltströme und -spannungen fließen, die keine oder nur sehr geringe Störimpulse erzeugen.

Endstufe und Zündspule sind in Figur 1 mit einem mit "L" bezeichneten Pfeil angedeutet. Der Kabelbaum zwischen dem Ausgang A des Treibers IST und der "Last" L ist als Widerstand R zwischen dem Ausgang A und dem Pluspol +Vb einer nicht dargestellten Fahrzeug-Batterie mit einem parallel dazu angeordneten Kondensator C, der die Kabelbaum-Kapazitäten symbolisiert, dargestellt. Der Kondensator C kann je nach Abschirmung des Kabelbaums auch zwischen dem Ausgang A und dem Minuspol GND der Fahrzeug-Batterie liegen, was strichliert angedeutet ist.

Der Treiber IST wird an einer Versorgungsspannung Vcc mit den Polen +Vcc und GND betrieben, wobei beispielsweise die Batteriespannung Vb = 12V, und die Versorgungsspannung Vcc = 5V.

Der Treiber IST enthält einen Schalttransistor T1, in diesem Ausführungsbeispiel ein DMOS-Transistor, dessen Drain-Source-Schaltstrecke zwischen dem Ausgang A und dem Minuspol GND liegt, an welcher im leitenden Zustand eine Spannung, die Ausgangsspannung Ua, abfällt, durch welche im fehlerfreien Zustand ein Strom Ia, beispielsweise 50mA, fließen soll. Zwischen Gate und Sourceanschluß des Schalttransistors T1 ist ein Gate-Source-Widerstand Rgs angeordnet.

Parallel zu diesem Schalttransistor T1 liegt ein zweiter Transistor T2 (d.h., jeweils die Drain- und die Sourceanschlüsse von T1 und T2 sind miteinander verbunden) vom gleichen Typ wie T1, aber geringer Leistung, durch den im leitenden Zustand im Vergleich zum Schalttransistor T1 ein wesentlich geringerer Strom, beispielsweise 50µA, fließen soll.

Außerdem ist noch ein dritter Transistor T3, gleichen Typs und gleicher Leistung wie Transistor T2, vorgesehen. Die Sourceanschlüsse und die Gateanschlüsse des zweiten und dritten Transistors T2 und T3 sind jeweils miteinander verbunden.

Innerhalb des Treibers IST ist eine Steuerschaltung ST vorgesehen, welche das Schalten der Last L bzw. deren Endstufe und die Durchführung der Open-Load-Diagnose mittels der Steuersignale st und zweier weiterer Signale k1 und k2 steuert, wie später ausgeführt.

Ein mit dem Steuersignal st identisches Ausgangssignal st der Steuerschaltung wird den Gateanschlüssen des zweiten und dritten Transistors T2 und T3 sowie dem Eingang eines von einem weiteren Ausgangssignal b der Steuerschaltung ST schaltbaren Buffer-Verstärkers B zugeführt. Der Ausgang des Buffer-Verstärkers B ist mit dem Gateanschluß des Schalttransistors T1 verbunden.

Während der zweite und der dritte Transistor T2 und T3 direkt vom Ausgangssignal st der Steuerschaltung ST ein- und ausschaltbar sind, ist der Buffer-Verstärker B erforderlich, um während der vom Ausgangssignal b der Steuerschaltung ST bestimmten Dauer seines Ausgangssignals, des Schaltsignals st den wesentlich höheren Gatestrom des Schalttransistors T1 zu liefern.

Außerdem sind ein erster und ein zweiter Komparator K1 und K2 vorgesehen, von denen je ein Eingang mit dem Drain-Anschluß des zweiten Transistors T2 und mit dem Ausgang des Treibers IST verbunden ist. Der Drain-Anschluß des dritten Transistors T3 und der zweite Eingang des ersten Komparators K1 sind mit einer Referenzstromquelle Q verbunden, die einen Referenzstrom Iref durch den dritten Transistor T3 treibt. Dem zweiten Eingang des zweiten Komparators K2 wird ab dem Beginn eines Steuersignals st zunächst eine Referenzspannung Uref1 zugeführt. Über die Ausgänge der Komparatoren K1 und K2 gelangen deren Ausgangssignale k1 und k2 zur Weiterbehandlung in die Steuerschaltung ST.

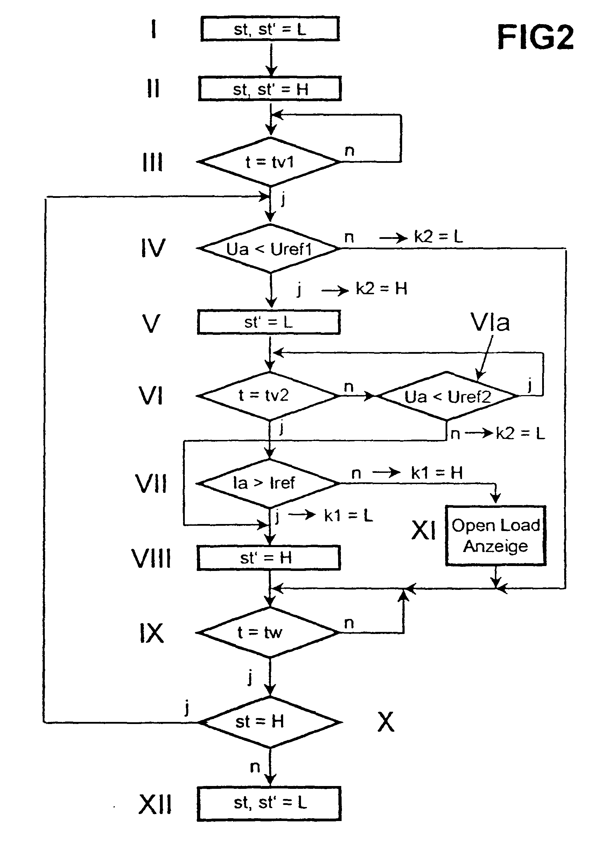

Anhand des in Figur 2 dargestellten Ablaufdiagramms wird nachfolgend das Verfahren einer Open-Load-Diagnose mittels des in Figur 1 dargestellten Lowside-Treibers IST beschrieben, wobei in Klammern gesetzte römische Zahlen auf die in Figur 2 entsprechend bezeichneten Funktionsblöcke hinweisen.

Im nicht angesteuerten Zustand (I), st, st' = L, sind der Schalttransistor T1 sowie der zweite und dritte Transistor T2 und T3 nichtleitend. Erscheint ein Steuersignal st (II), so werden gleichzeitig st und st' = H, wodurch der Schalttransistor T1 sowie der zweite und dritte Transistor T2 und T3 leitend gesteuert werden. Dadurch wird im fehlerfreien Fall der Kondensator C - der, wenn er, wie in Figur 2 dargestellt, parallel zum Widerstand R liegt, entladen war - rasch aufgeladen und die Ausgangsspannung Ua über der Drain-Source-Strecke des Schalttransistors T1 wird klein, beispielsweise Ua = 100mV.

Wegen der Umladedauer der durch den Kondensator C repräsentierten Kabelbaumkapazitäten wird nach einer vorgegebenen ersten Verzögerungszeit tv1 (III) ab dem Beginn des Steuersignals st von der Steuerschaltung ST das Ausgangssignal k2 des Komparators K2 abgefragt, in welchem die Ausgangsspannung Ua mit einer ersten Referenzspannung Uref1 verglichen wird. Ist zu diesem Zeitpunkt die Ausgangsspannung Ua > Uref1, wobei beispielsweise Uref1 = 50mV, so sei k2 = L (IV). Dies bedeutet, daß kein Open-Load-Fall vorliegt und die Ansteuerung der Last L ordnungsgemäß weitergehen kann.

In diesem Fall wird der Vergleich der Ausgangsspannung Ua mit der ersten Referenzspannung Uref1 in Abständen, die durch eine vorgegebene Wartezeit tw bestimmt werden (IX), wiederholt, solange das Steuersignal st andauert (X). Nach dessen Verschwinden, st, st' = L (XII), werden die drei Transistoren T1, T2 und T3 wieder nichtleitend gesteuert.

Ist jedoch Ua < Uref1 (Ua < 50mV), wobei k2 = H, so ist das ein Indiz für einen Open-Load-Fall.

Zur Sicherheit wird deshalb eine Open-Load-Diagnose durchgeführt.

Dazu wird mittels eines Signals b der Steuerschaltung der Ausgang des Buffer-Verstärkers B hochohmig geschaltet, wodurch st' = L wird (V)und der Schalttransistor T1 abgeschaltet wird. Der zweite und dritte Transistor T2 und T3, vom Steuersignal st angesteuert, bleiben leitend.

Gleichzeitig wird eine zweite Verzögerungszeit tv2 (VI), die gleich lang wie die erste Verzögerungszeit tv1 sein kann, in Gang gesetzt und dem zweiten Komparator K2 anstelle der ersten Referenzspannung Uref1 eine zweite Referenzspannung Uref2, beispielsweise Uref2 = 400mV, zugeführt. Die Gate-Source-Kapazität des Schalttransistors T1 entlädt sich über den Gate-Source-Widerstand Rgs, wodurch dessen Drain-Source-Strecke hochohmiger wird und die an ihm anliegende Ausgangsspannung Ua ansteigt.

Wenn während der zweiten Verzögerungszeit tv2 die Ausgangsspannung Ua größer als die zweite Referenzspannung Uref2 wird (VIa), so wird k2 = L und die Open-Load-Diagnose wird abgebrochen, d.h., der Buffer-Verstärker B wird wieder niederohmig geschaltet (st' = H), wodurch der Schalttransistor T1 wieder eingeschaltet wird (VIII).

Ist nach Ablauf der zweiten Verzögerungszeit tv2 (VI) die Ausgangsspannung Ua kleiner als die zweite Referenzspannung Uref2 (Ua < Uref2), so wird anschließend der Ausgangsstrom Ia mit dem von der Referenzstromquelle Q gelieferten Referenzstrom Iref verglichen (VII). Da dieser Vergleich im Komparator K1 durchgeführt wird, wird die dem Ausgangsstrom Ia proportionale, an der Drain-Source-Strecke des zweiten Transistors T2 abfallende Ausgangsspannung Ua mit der vom Referenzstrom Iref hervorgerufenen, an der Drain-Source-Strecke des dritten Transistors T3 abfallenden Spannung U3 verglichen.

Ist Ia > Iref bzw. Ua > U3 (VII), wobei k1 = L, so wird davon ausgegangen, daß kein Open-Load-Fall vorliegt, und es wird der Ausgang des Buffer-Verstärkers B wieder niederohmig und damit der Schalttransistor T1 leitend geschaltet (VIII). Der Spannungsanstieg am Schalttransistor T1 während der Open-Load-Diagnose ist so gering (~400mV), daß die Last in dieser Zeit (V bis VIII) nicht abgeschaltet wird.

Nach der bereits erwähnten Wartezeit tw (IX) wird, sofern das Steuersignal st noch andauert (X), der beschriebene Diagnosevorgang, beginnend mit dem Vergleich der Ausgangsspannung Ua mit der Referenzspannung Uref (IV), wiederholt. Nach dem Verschwinden des Steuersignals st, und damit st', werden die drei Transistoren T1, T2 und T3 wieder nichtleitend gesteuert (XII).

Ist jedoch Ia < Iref, d.h., Ua < U3 (VII), mit k1 = H, so wird nunmehr davon ausgegangen, daß ein Open-Load-Fall vorliegt. In diesem Fall erfolgt eine Anzeige Az (XI), d.h., es wird beispielsweise eine optische Anzeige aktiviert oder im Rahmen einer On-Board-Diagnose in einem zugeordneten Speicher in der Steuerschaltung ST oder im nicht dargestellten Motorsteuergerät ein Eintrag vorgenommen. Nach Abwarten der Wartezeit tw (IX) wird eine erneute Diagnose vorgenommen, wenn das Steuersignal st noch andauert, oder es wird nach dem Ende des Steuersignals st der Einschaltvorgang beendet.

Bei Vorliegen eines Open-Load-Falles können beispielsweise auch alle weiteren Einschaltvorgänge unterbunden werden.

Erfindungsgemäß kann der Treiber entweder einen Lowside-Schalttransistor T1, wie im Ausführungsbeispiel beschrieben und in der Zeichnung dargestellt, oder einen Highside-Schalttransistor aufweisen. Der Treiber kann aber auch, insbesondere in integrierter Ausführung, um in der Anwendung unabhängig zu sein, einen Push-Pull-Treiber mit sowohl einem Lowside- als auch einem Highside-Transistor aufweisen. In diesem Fall ist sowohl für den Lowside-, als auch für den Highside-Schalttransistor eine (in Figur 1 strichpunktiert umrahmte) Schaltung IST erforderlich.

## Patentansprüche

1. Verfahren zur Open-Load-Diagnose einer Schaltstufe mit einer mit wenigstens einem Schalttransistor (T1) in Reihe liegenden Last (L),
**dadurch gekennzeichnet,**
- **daß** nach Ablauf einer vorgegebenen, ersten Verzögerungszeit (tv1) seit dem Erscheinen eines Steuersignals (st) die am Schalttransistor (T1) liegende Ausgangsspannung Ua mit einer vorgegebenen, ersten Referenzspannung Uref1 verglichen wird,
wobei im Falle Ua > Uref1 die Open-Load-Diagnose abgebrochen und die Ansteuerung der Schaltstufe bis zum Ende des Steuersignals (st) aufrecht erhalten wird,
wobei im Falle Ua < Uref1 der Schalttransistor (T1) nichtleitend gesteuert wird, und eine vorgegebene, zweite Verzögerungszeit (tv2) gestartet wird,
- **daß** während des Laufs der zweiten Verzögerungszeit (tv2) die Ausgangsspannung Ua mit einer vorgegebenen, zweiten Referenzspannung Uref2 verglichen wird,
wobei im Falle Ua > Uref2 die Open-Load-Diagnose abgebrochen, der Schalttransistor (T1) wieder leitend gesteuert und die Ansteuerung der Schaltstufe bis zum Ende des Steuersignals (st) aufrecht erhalten wird,
- **daß** im Falle Ua < Uref2 nach Ablauf der zweiten Verzögerungszeit (tv2) der durch den Schalttransistor (T1) fließende Ausgangsstrom Ia oder eine zu ihm proportionale Spannung mit einem vorgegebenen Referenzstrom Iref oder einer zu diesem proportionalen Spannung (U3) verglichen wird,
wobei im Falle Ia > Iref die Open-Load-Diagnose abgebrochen und die Ansteuerung der Schaltstufe bis zum Ende des Steuersignals (st) aufrecht erhalten wird,
wobei im Falle Ia < Iref eine Open_Load-Anzeige (Az) erfolgt, und
- **daß** nach Ablauf einer vorgegebenen Wartezeit (tw) die Open-Load-Diagnose ab dem Ende der ersten Verzögerungszeit (tv1) so lange wiederholt wird, bis das Steuersignal (st) endet.

2. Verfahren nach Anspruch 1, **dadurch gekennzeichnet, daß** durch das Anzeigesignal (Az) eine einen Open-Load-Fall kennzeichnende optische Anzeige aktiviert wird.

3. Verfahren nach Anspruch 1, **dadurch gekennzeichnet, daß** durch das Anzeigesignal (Az) in einem Diagnosespeicher ein einen Open-Load-Fall kennzeichnender Eintrag vorgenommen wird.

4. Vorrichtung zur Durchführung des Verfahrens nach Anspruch 1, mit einem Schalttransistor (T1) welcher mittels Steuersignalen (st, st') über einen schaltbaren Buffer-Verstärker (B) steuerbar ist,
- mit einem mittels der Steuersignale (st) steuerbaren zweiten Transistor (T2), dessen Drain-Source-Strecke parallel zur Drain-Source-Strecke des Schalttransistors (T1) geschaltet ist,
- mit einem mittels der Steuersignale (st) steuerbaren dritten Transistor (T3), dessen Gate- und Source-Anschlüsse mit denen des zweiten Transistors (T2) verbunden sind,
- mit einer Referenzstromquelle (Q), die mit dem Drain-Anschluß des dritten Transistors (T3) verbunden ist,
-- mit einem ersten Komparator (K1), dessen einer Eingang mit dem Drain-Anschluß des dritten Transistors (T3) verbunden ist, und dessen anderer Eingang mit dem Drain-Anschluß des zweiten Transistors (T2) verbunden ist,
- mit einem zweiten Komparator (K2), dessen einer Eingang mit dem Drain-Anschluß des zweiten Transistors (T2) verbunden ist, und dessen anderem Eingang vorgegebene Referenzspannungen (Uref1, Uref2) zuführbar sind, und
- mit einer Steuerschaltung (ST), welche mittels eines in ihr gespeicherten Programms und abhängig von den Steuersignalen (st) und den Ausgangssignalen (k1, k2) der beiden Komparatoren (K1, K2) den Buffer-Verstärker (B) und die Transistoren (T1, T2, T3) steuert sowie die Referenzspannungen (Uref1, Uref2) vorgibt.

5. Vorrichtung nach Anspruch 4, **dadurch gekennzeichnet, daß** der Schalttransistor (T1) ein DMOS-Transistor ist.

6. Vorrichtung nach Anspruch 4, **dadurch gekennzeichnet, daß** das Verhältnis des durch den Schalttransistor (T1) fließenden Stromes (Ia) zu dem durch den zweiten (T2) oder dritten Transistor (T3) fließenden Strom größer als 100 ist.

7. Vorrichtung nach Anspruch 4, **dadurch gekennzeichnet, daß** der erste Komparator (K1) ein Ausgangssignal (k1 = H) abgibt, wenn der vom Referenzstrom (Iref) am dritten Transistor (T3) verursachte Spannungsabfall (U3) größer ist als der von dem durch den zweiten Transistor (T2) fließenden Strom verursachte Spannungsabfall.

8. Vorrichtung nach Anspruch 4, **dadurch gekennzeichnet, daß** der zweite Komparator (K2) ein Ausgangssignal (k2 = H) abgibt, wenn die erste Referenzspannung (Uref1) größer als die im leitenden Zustand am Schalttransistor (T1) abfallende Ausgangsspannung (Ua) ist, oder wenn die zweite Referenzspannung (Uref2) größer als die im nichtleitenden Zustand am Schalttransistor (T1) abfallende Ausgangsspannung (Ua) ist.

9. Vorrichtung nach Anspruch 4, **dadurch gekennzeichnet, daß** der Schalttransistor (T1) ein Lowside- oder ein Highside-Transistor ist.

10. Vorrichtung nach Anspruch 4, **dadurch gekennzeichnet, daß** der Schalttransistor (T1) ein Push-Pull-Treiber mit sowohl einem Lowside- als auch einem Highside-Transistor ist, wobei sowohl für den Lowside- als auch für den Highside-Transistor eine Schaltstufe (IST) vorgesehen ist.

## Claims

1. Method for the open-load diagnosis of a switching stage having a load (L) connected in series with at least one switching transistor (T1),
**characterized**
- **in that**, after a predetermined first delay time (tv1) has elapsed since the appearance of a control signal (st), the output voltage Ua across the switching transistor (T1) is compared with a predetermined first reference voltage Uref1, in the case where Ua > Uref1 the open-load diagnosis being terminated and the driving of the switching stage being maintained until the end of the control signal (st), in the case where Ua < Uref1 the switching transistor (T1) being turned off and a predetermined second delay time (tv2) being started,
- **in that**, during the course of the second delay time (tv2), the output voltage Ua is compared with a predetermined second reference voltage Uref2, in the case where Ua > Uref2 the open-load diagnosis being terminated, the switching transistor (T1) being turned on again and the driving of the switching stage being maintained until the end of the control signal (st),
- **in that**, in the case where Ua < Uref2 after the second delay time (tv2) has elapsed, the output current Ia flowing through the switching transistor (T1) or a voltage proportional to said current is compared with a predetermined reference current Iref or a voltage (U3) proportional to the latter, in the case where Ia > Iref the open-load diagnosis being terminated and the driving of the switching stage being maintained until the end of the control signal (st), in the case where Ia < Iref an open-load indication (Az) being effected, and
- **in that**, after a predetermined waiting time (tw) has elapsed, the open-load diagnosis is repeated from the end of the first delay time (tv1) until the control signal (st) ends.

2. Method according to Claim 1, **characterized in that** an optical indication identifying an open-load case is activated by the indication signal (Az).

3. Method according to Claim 1, **characterized in that** an entry identifying an open-load case is made in a diagnosis memory as a result of the indication signal (Az).

4. Device for carrying out the method according to Claim 1, having a switching transistor (T1), which can be controlled by means of control signals (st, st`) via a switchable buffer amplifier (B),
- having a second transistor (T2), which can be controlled by means of the control signals (st) and whose drain-source path is connected in parallel with the drain-source path of the switching transistor (T1),
- having a third transistor (T3), which can be controlled by means of the control signals (st) and whose gate and source terminals are connected to those of the second transistor (T2),
- having a reference current source (Q), which is connected to the drain terminal of the third transistor (T3),
- having a first comparator (K1), one of whose inputs is connected to the drain terminal of the third transistor (T3) and whose other input is connected to the drain terminal of the second transistor (T2),
- having a second comparator (K2), one of whose inputs is connected to the drain terminal of the second transistor (T2) and to whose other input predetermined reference voltages (Uref1, Uref2) can be fed, and
- having a control circuit (ST), which, by means of a program stored in it and depending on the control signals (st) and the output signals (k1, k2) of the two comparators (K1, K2), controls the buffer amplifier (B) and the transistors (T1, T2, T3) and also predetermines the reference voltages (Uref1, Uref2).

5. Device according to Claim 4, **characterized in that** the switching transistor (T1) is a DMOS transistor.

6. Device according to Claim 4, **characterized in that** the ratio of the current (Ia) flowing through the switching transistor (T1) to the current flowing through the second (T2) or third transistor (T3) is greater than 100.

7. Device according to Claim 4, **characterized in that** the first comparator (K1) emits an output signal (k1 = H) if the voltage drop (U3) caused across the third transistor (T3) by the reference current (Iref) is greater than the voltage drop caused by the current flowing through the second transistor (T2).

8. Device according to Claim 4, **characterized in that** the second comparator (K2) emits an output signal (k2 = H) if the first reference voltage (Uref1) is greater than the output voltage (Ua) dropped across the switching transistor (T1) in the on state, or if the second reference voltage (Uref2) is greater than the output voltage (Ua) dropped across the switching transistor (T1) in the off state.

9. Device according to Claim 4, **characterized in that** the switching transistor (T1) is a low-side or a high-side transistor.

10. Device according to Claim 4, **characterized in that** the switching transistor (T1) is a push-pull driver having both a low-side transistor and a high-side transistor, a switching stage (IST) being provided both for the low-side transistor and for the high-side transistor.

## Revendications

1. Procédé de diagnostic de charge ouverte d'un étage de commutation avec une charge (L) se trouvant en série avec au moins un transistor de commutation (T1),
**caractérisé en ce que**
- après écoulement d'une première temporisation (tv1) prédéterminée depuis l'apparition d'un signal de commande (st), la tension de sortie Ua appliquée au transistor de commutation (T1) est comparée à la première tension de référence Uref1 prédéterminée,
dans lequel lorsque Ua > Uref1, le diagnostic de charge ouverte est interrompu et la commande de l'étage de commutation est maintenue jusqu'à la fin du signal de commande (st),
dans lequel lorsque Ua < Uref1, le transistor de commutation (T1) est commandé pour ne pas être conducteur et une seconde temporisation (tv2) est lancée,
- pendant l'écoulement de la seconde temporisation (tv2), la tension de sortie Ua est comparée à une seconde tension de référence Uref2 déterminée,
lorsque Ua > Uref2, le diagnostic de charge ouverte est interrompu, le transistor de commutation (T1) est à nouveau commandé pour être conducteur et la commande de l'étage de commutation est maintenue jusqu'à la fin du signal de commande (st),
- lorsque Ua < Uref2, après écoulement de la seconde temporisation (tv2), le courant de sortie Ia s'écoule à travers le transistor de commutation (T1) ou une tension proportionnelle à lui est comparée à un courant de référence Iref prédéterminé ou à une tension (U3) proportionnelle à lui,
lorsque Ia > Iref, le diagnostic de charge ouverte est interrompu et la commande de l'étage de commutation est maintenue jusqu'à la fin du signal de commande (st),
lorsque Ia < Iref, un affichage de charge ouverte (Az) est visualisé, et
- après écoulement d'un temps d'attente (tw), le diagnostic de charge ouverte est répété au terme de la première temporisation (tv1) jusqu'à ce que le signal de commande (st) cesse.

2. Procédé selon la revendication 1, **caractérisé en ce que** par le signal d'affichage (Az), un affichage optique caractérisant un cas de charge ouverte est activé.

3. Procédé selon la revendication 1, **caractérisé en ce que** par le signal d'affichage (Az), une saisie caractérisant un cas de charge ouverte est effectuée dans une mémoire de diagnostic.

4. Dispositif destiné à exécuter le procédé selon la revendication 1, avec un transistor de commutation (T1) qui peut être commandé au moyen de signaux de commande (st, st') via un amplificateur tampon (B) connectable,
- avec un second transistor (T2) dont la trajectoire drain-source est branchée en parallèle avec la trajectoire drain-source du transistor de commutation (T1), pouvant être commandé au moyen de signaux de commande (st),
- avec un troisième transistor (T3) dont les bornes de la grille et de la source sont reliées à celles du second transistor (T2), pouvant être commandé aux moyens de signaux de commande (st),
avec une source de courant de référence (Q) qui est reliée à la borne du drain du troisième transistor (T3),
- avec un premier comparateur (K1) dont l'une des entrées est reliée à la borne du drain du troisième transistor (T3) et dont l'autre entrée est reliée au second transistor (T2),
- avec un second comparateur (k2) dont l'une des entrées est reliée à la borne du drain du second transistor (T2) et des tensions de référence (Uref1 et Uref2) pouvant être appliquées à l'autre entrée, et
- avec un circuit de commande (ST) qui commande l'amplificateur tampon (B) et les transistors (T1, T2, T3) ainsi que les tensions de référence (Uref1 et Uref2), au moyen d'un programme stocké dans ledit circuit et en fonction des signaux de commande (st) et des signaux de sortie (k1, k2) des deux comparateurs (K1, K2).

5. Dispositif selon la revendication 4, **caractérisé en ce que** le transistor de commutation (T1) est un transistor DMOS.

6. Dispositif selon la revendication 4, **caractérisé en ce que** le rapport entre le courant (Ia) s'écoulant à travers le transistor de commutation (T1) et le courant s'écoulant à travers le second (T2) et le troisième (T3) transistor est supérieur à 100.

7. Dispositif selon la revendication 4, **caractérisé en ce que** le premier comparateur (K1) délivre un signal de sortie (k1 = H) lorsque la chute de tension (U3) provoquée par le courant de référence (Iref) sur le troisième transistor (T3) est supérieure à la chute de tension provoquée par le courant s'écoulant dans le second transistor (T2).

8. Dispositif selon la revendication 4, **caractérisé en ce que** le second comparateur (K2) délivre un signal de sortie (k2 = H) lorsque la première tension de référence (Uref1) est supérieure à la tension de sortie (Ua) diminuant à l'état conducteur dans le transistor de commutation (T1), ou lorsque la seconde tension de référence (Uref2) est supérieure à la tension de sortie (Ua) diminuant à l'état non conducteur dans le transistor de commutation (T1).

9. Dispositif selon la revendication 4, **caractérisé en ce que** le transistor de commutation (T1) est un transistor connecté côté masse ou côté alimentation.

10. Dispositif selon la revendication 4, **caractérisé en ce que** le transistor de commutation (T1) est un circuit d'activation push-pull avec un transistor côté masse aussi bien qu'un transistor côté alimentation, un étage de commutation (IST) étant prévu aussi bien pour le transistor côté masse que pour le transistor côté alimentation.
